# EUROPÄISCHE PATENTANMELDUNG

(11) **EP 0 926 029 A2**
(43) Veröffentlichungstag der Anmeldung: **30.06.1999**
(21) Anmeldenummer: 98122914.9
(22) Anmeldetag: 02.12.1998
(51) Int. Cl.: B60S 3/04

(54) **Unterboden-Waschvorrichtung für Kraftfahrzeuge**

(30) Priorität: 18.12.1997 DE 19756424; 03.09.1998 DE 19840158
(71) Anmelder: WESUMAT Fahrzeugwaschanlagen GmbH, D-86156 Augsburg (DE)
(72) Erfinder: Decker, Wolfgang, 86441 Zusmarshausen-Wollbach (DE)
(74) Vertreter: Liebau, Gerhard (DE)

(57) **Zusammenfassung**

Bei dieser Unterboden- Waschvorrichtung für Kraftfahrzeuge sind an einem relativ zum Fahrzeug (F) in dessen Längsrichtung (L) beweglichen Gestell zwei Paare von mit mehreren Sprühdüsen besetzten Sprüharmen (3a, 3b; 4a, 4b) vorgesehen, die im bodennahen Bereich an gegenüberliegenden Gestellseiten (1a, 1b) je um eine vertikale Schwenkachse (A1, A2) schwenkbar angeordnet sind. Den Sprüharmen (3a, 3b; 4a, 4b) sind Stellmotoren (6a, 6b) zugeordnet, mittels welchen die Sprüharme unter den Fahrzeugboden in ihre quer zur Fahrzeuglängsrichtung (L) verlaufende Einschwenkstellung einschwenkbar und in eine zweite, parallel zur Fahrzeuglängsrichtung (L) verlaufende Ausschwenkstellung ausschwenkbar sind. Es ist ferner eine die Fahrzeugräder (R) abtastende, auf die Stellmotoren (6a, 6b) einwirkende Steuereinrichtung (7) vorgesehen, mittels welcher die Sprüharme durch die Stellmotoren derart antreibbar sind, daß jeder der Sprüharme (3a, 3b; 4a, 4b) vor dem Erreichen eines Fahrzeugrades (R) aus seiner Einschwenkstellung in seine Ausschwenkstellung ausschwenkbar, während des Passierens des Fahrzeugrades in seiner Ausschwenkstellung gehalten und nach dem Passieren des Fahrzeugrades wieder in seine Einschwenkstellung bringbar ist.

## Beschreibung

Die Erfindung betrifft eine Unterboden-Waschvorrichtung für Kraftfahrzeuge mit mindestens einem relativ zum Fahrzeug in dessen Längsrichtung beweglichen Gestell und mit einem Paar von mit mehreren Sprühdüsen besetzten Spüharmen, von denen je einer im bodennahen Bereich an gegenüberliegenden Gestellseiten (Fahrzeugseiten) je um eine vertikale Schwenkachse schwenkbar angeordnet und aus einer quer zur Fahrzeuglängsrichtung verlaufenden Einschwenkstellung unter dem Fahrzeugboden zur Gestellseite hin ausschwenkbar ist.

Bei einer derartigen bekannten Unterboden-Waschvorrichtung (vgl. Firmenprospekt 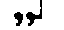 BESTSELLER" der Firma Oy Tammermatic Ab, FI-33101 Tammerfors, Finnland) sind die Sprüharme je an einem der beiden Portalständer eines gegenüber dem Fahrzeug verfahrbaren Waschportal angeordnet und werden durch Federkraft in ihrer quer zur Fahrzeuglängsrichtung verlaufenden Stellung gehalten. Sobald die Sprüharme gegen ein Fahrzeugrad zur Anlage kommen, werden sie durch das jeweilige Fahrzeugrad entgegen der Federkraft zur Gestellseite hin ausgeschwenkt. Sie können jedoch erst dann wieder unter Federkraft unter den Fahrzeugboden einschwenken, wenn sich der jeweilige Sprüharm in seiner ganzen Länge am Fahrzeugrad vorbeibewegt hat und das freie Ende des Sprüharmes den Kontakt zum Fahrzeugrad verliert. Hierdurch bleibt nicht nur der Bereich zwischen gegenüberliegenden Fahrzeugrädern ungewaschen, sondern auch ein Teil des an die Fahrzeugräder anschließenden Bereichs des Unterbodens. Wenn man auch diesen Teilbereich waschen will, dann kann dies nur durch Zurückfahren des Portals erfolgen, wodurch jedoch der Waschprozeß verlangen und ein eventuell gleichzeitig laufender Wasch- oder Vorwaschprozeß beeinträchtigt wird.

Dieselben Nachteile weist eine ähnliche bekannte Unterboden-Waschvorrichtung gemäß der DE-AS 1 239 203 auf. Bei dieser besteht der Sprüharm aus einer am Ende mit einem Spritzkopf versehenen biegsamen Leitung, die von einer als Schraubenfeder ausgebildeten elastischen Halterung umgeben ist. Ein solcher Sprüharm ist an einem um das stehende Fahrzeug entlang einer geschlossenen Bahn herumgeführten Fahrgestell angeordnet, welches auch eine vertikale Bürste und eine über die halbe Wagenbreite reichende horizontale Bürste trägt. Normalerweise ragt der Sprüharm von der Seite her in den Raum zwischen Fahrzeugunterboden und Waschraumboden. Sobald der elastische Sprüharm ein Fahrzeugrad berührt, weicht er elastisch aus und wird wahrend des Weiterbewegens des Fahrgestells entlang der äußeren Stirnfläche des jeweiligen Fahrzeugrad entlanggeführt. Bei einer anderen Ausführungsform dieser bekannten Unterboden-Waschvorrichtung ist an einem das Fahrzeugrad U-artig umgreifenden, portalartigen Fahrgestell, an jedem der beiden Portalständer je ein derartiger elastischer Sprüharm angeordnet, so daß die beiden einander gegenüberliegenden Sprüharme, ähnlich wie bei der eingangs beschriebenen Unterboden-Waschvorrichtung, ein Paar bilden.

Der Erfindung liegt daher die Aufgabe zugrunde, eine Unterboden-Waschvorrichtung für Kraftfahrzeuge der eingangs erwähnten Art zu schaffen, bei der die Unterbodenwäsche bei kontinuierlicher Relativbewegung zwischen Fahrzeug und Gestell ohne Beeinträchtigung eines eventuell gleichzeitig laufenden Wasch- oder Waschvorprozesses unter Zeiteinsparung und mit verbessertem Waschergebnis durchgeführt werden kann.

Dies wird nach der Erfindung dadurch erreicht, daß ein zweites, gleichartiges Paar von Sprüharmen ebenfalls um vertikale Schwenkachsen schwenkbar an den gegenüberliegenden Gestellseiten angeordnet ist, daß den Sprüharmen Stellmotoren zugeordnet worden sind, mittels welchen die Sprüharme unter den Fahrzeugboden in ihre quer zur Fahrzeuglängsrichtung verlaufende Einschwenkstellung schwenkbar und in eine zweite, parallel zur Fahrzeuglängsrichtung verlaufende Ausschwenkstellung ausschwenkbar sind, und daß eine die Fahrzeugräder abtastende, auf die Stellmotoren einwirkende Steuereinrichtung vorgesehen ist, mittels welcher die Sprüharme durch die Stellmotoren derart antreibbar sind, daß jeder der Sprüharme vor dem Erreichen eines Fahrzeugrades aus seiner Einschwenkstellung in seine Ausschwenkstellung ausschwenkbar, während des Passierens des Fahrzeugrades in seiner Ausschwerkstellung gehalten und nach dem Passieren des Fahrzeugrades wieder in seine Einschwenkstellung bringbar ist.

Dank dieser Ausgestaltung ist es möglich, den Unterboden eines Kraftfahrzeuges bei kontinuierlicher Relativbewegung zwischen Fahrzeug und Gestell, d.h. ohne Zurücksetzen eines Portals, und damit auch ohne Unterbrechung eines etwaigen Waschoder Waschvorprozesses, vollständig und gründlich zu waschen. Bereiche des Unterbodens, die von dem ersten Paar von Sprührohren nicht gewaschen werden, können von den Sprühstrahlen des zweiten Paares von Sprührohren ereicht werden, da die Einschwenk- und Ausschwenkbewegungen des auf einer Gestellseite angeordneten ersten Sprüharmes immer im entgegengesetzten Drehsinn zu den Ein- und Ausschwenkbewegungen des an der gleichen Gestellseite angeordneten zweiten Sprüharmes verlaufen. Viele Bereiche des Unterbodens werden dabei aufeinanderfolgend von beiden auf einer Gestellseite angeordneten Sprüharmen gewaschen. Außerdem wird auch eine bessere Reinigung der unteren Seitenbereiche des Kraftfahrzeuges erzielt, weil sich nämlich immer eines der Sprührohre in seiner ausgeschwenkten Stellung parallel zur Fahrzeuglängsrichtung befindet und dabei seine Sprühstrahlen die unteren Seitenbereiche waschen, während der zweite Sprüharm unter den Fahrzeugboden eingeschwenkt ist und den Unterboden wäscht. Durch den Wegfall der Zurückbewegung des Portals wird außerdem der Waschprozeß verkürzt. Schließlich kann die erfindungsgemäße Unterboden-Waschvorrichtung außer bei Portalwaschanlagen auch in Waschstraßen eingesetzt werden, was gegenüber ortsfest montierten Sprührohren ebenfalls Vorteile mit sich bringt. Da hierfür keine bauseitigen Vorkehrungen getroffen werden müssen, können bestehende Waschanlagen auch nachgerüstet werden, was sowohl für Portalwaschanlagen wie auch für Waschstraßen gilt.

Vorteilhalte Ausgestaltungen der Erfindung sind in den Unteransprüchen gekennzeichnet.

Die Erfindung ist in folgendem, anhand von, in Verbindung mit einer Portalwaschanlage dargestellten, Ausführungsbeispielen näher erläutert Es zeigen:
- Figur 1: die Stirnansicht des Portals einer Portalwaschanlage mit einem ersten Ausführungsbeispiel einer daran angeordneten Unterboden-Waschvorrichtung in Ausgangsstellung,
- Figur 2: die zugehörige Seitenansicht,
- Figur 3: eine weitere Seitenansicht in einer zweiten Arbeitsstellung des Portals,
- Figur 4: eine Draufsicht aufFahrzeug und Portal in dessen Ausgangsstellung,
- Figur 5 a)-e): eine Draufsicht auf das Portal und das Fahrzeug in verschiedenen, aufeinanderfolgenden Arbeitsstellungen des Portals,
- Figur 6 a)-j) und Figur 7a)-i): zwei weitere Ausführungsbeispiele, jeweils in Draufsicht auf das Portal und das Fahrzeug in verschiedenen, aufeinanderfolgenden Arbeitsstellungen des Portals.

Das Portal 1 kam übliche Waschvorrichtngen, wie Horizontalbürsten, Vertikalbürsten und/oder Hochdruckreinigungsvorrichtungen, Trocknungseinrichtungen und dgl. aufweisen. Diese sind nicht dargestellt, da es sich um bekannte Einrichtungen handelt. Das Portal ist in Fahrzeuglängsrichtung L oder auch in Richtung der Fahrzeuglängsmittelebene M auf Schienen 2 verfahrbar gelagert Entlang dieser Schienen 2 wird das Portal während der Fahrzeugwäsche hin- und herbewegt, während das Fahrzeug ruht Da die erfindungsgemäße Unterbodenwaschvorrichtung aber auch an einem ortsfesten Gestell in einer Fahrzeugwaschstraße Anwendung Den kann, in welcher das Fahrzeug durch Förderketten hindurchgezogen wird, ist in den Patentansprüchen der Ausdruck ,,Gestell" verwendet worden, unter dem sowohl ein ortsfestes Gestell in einer Fahrzeugwaschstraße wie auch ein bewegliches Portal in einer Portalwaschanlage verstanden wird. Der Ausdruck 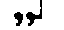 Gestellseite" ist daher mit 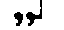 Portalseite" oder 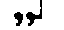 Portalstander" gleichbedeutend.

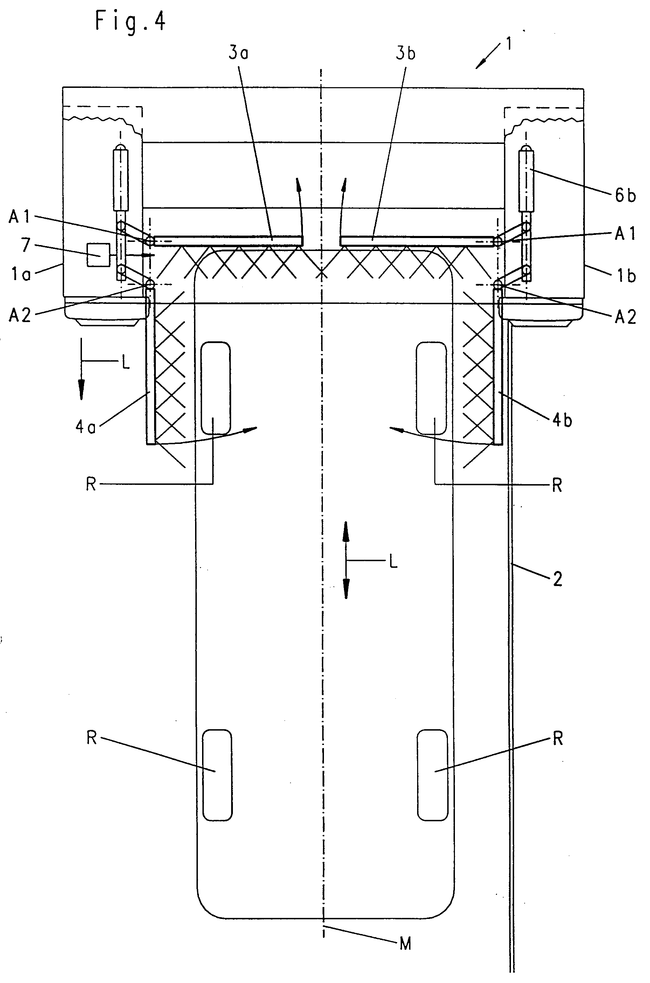

In dem Portal 1 sind im bodennahen Bereich an dessen einander gegenüberliegenden Portalseiten 1a, 1b zwei Paare von Spüharmen 3a, 3b bzw. 4a, 4b schwenkbar angeordnet. Die Sprüharme 3a, 3b sind um vertikale Achsen A1 schwenkbar, die Sprüharme 4a, 4b um vertikale Achsen A2. Die Achsen A1 und A2 sind an jeder Portalseite bei diesem Ausführungsbeispiel in einem Abstand a in Fahrzeuglängsrichtung versetzt zueinander angeordnet. Jeder der Sprüharme 3a, 3b bzw. 4a, 4b weist mehrere Sprühdüsen 5 auf. Durch Verschwenken der Sprüharme 3a, 3b um ihre vertikalen Schwenkachsen A1 und der Sprüharme 4a, 4b um ihre vertikalen Schwenkachsen A2 können die Sprüharme abwechselnd in eine quer zur Fahrzeuglängsrichtung L verlaufende Stellung, die als Einschwenkstellung bezeichnet wird, oder in eine parallel zur Fahrzeuglängsrichtung verlaufende Stellung, die als Ausschwenkstellung bezeichnet wird, gebracht werden. In Figur 4 sind die beiden Sprüharme 3a, 3b in ihrer Einschwerkstellung, die Sprüharme 4a, 4b hingegen in ihrer Ausschwenkstellung dargestellt.

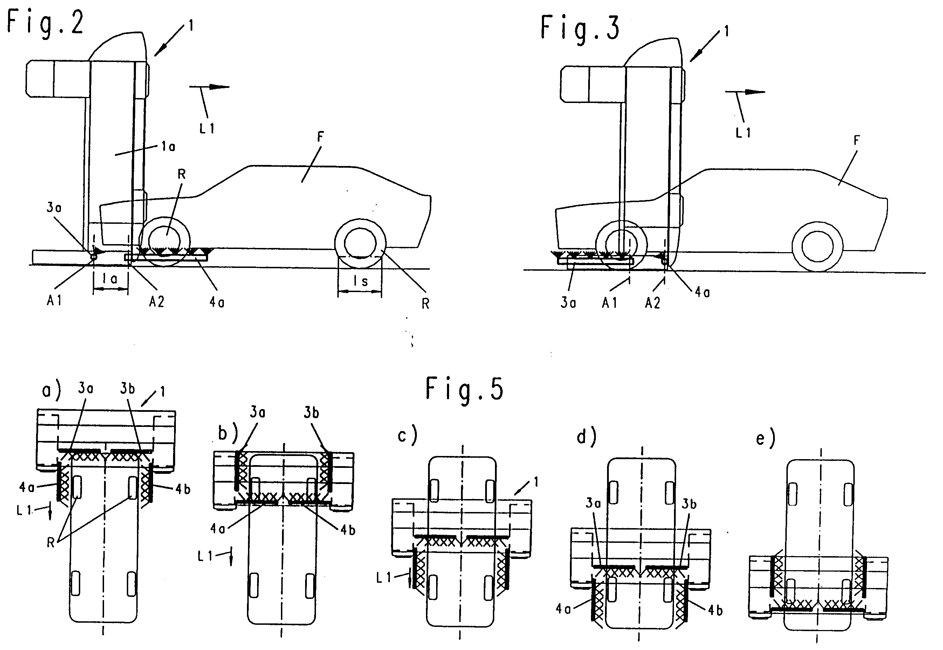

Zum Verschwenken der Sprüharme 3a, 3b bzw. 4a, 4b kann jedem Sprüharm ein eigener Stellmotor zugeordnet sein. Bei dem in Figur 4 dargestellten vorteilhaften Ausführungsbeispiel ist den beiden auf einer Portalseite 1a angeordneten Sprüharmen 3a und 4a ein gemeinsamer Stellmotor 6a, z.B. ein druckmittelbeaufschlagter Zylinder, zugeordnet, und den beiden auf der anderen Gestellseite angeordneten Sprüharmen 3b, 4b ein gemeinsamer Stellmotor 6b. Voraussetzung hierfür ist es, daß die Schwenkachsen A1 und A2 in einem genügend großen Abstand a angeordnet sind, welcher etwas größer als die Länge s der waagerechten Sehne eines Fahrzeugrades R in Höhe der Sprüharme sein sollte (vgl. Figur 2). Hierdurch ist sichergestellt, daß auf ein und derselben Portalseite 1a oder 1b die Sprüharme 3a, 4a bzw. 3b, 4b im richtigen Zeitpunkt ein- bzw. ausgeschwenkt werden.

Ferner ist in dem Portal 1 eine die Fahrzeugräder z.B. mittels einer Lichtschranke oder mittels eines Infrarotsenders abtastende Steuereinrichtung 7 vorgesehen, welche auf die Stellmotoren 6a, 6b in der nachstehend noch näher beschriebenen Weise einwirkt. Mittels des Stellmotors 6a können die beiden auf der gleichen Portalseite 1a schwenkbar gelagerten Sprüharme 3a, 4a jeweils im gleichen Drehsinn geschwenkt werden, jedoch wird dabei der eine Sprüharm, z.B. der Sprüharm 4a, eingeschwenkt, während der andere Sprüharm 3a ausgeschwenkt wird und umgekehrt.

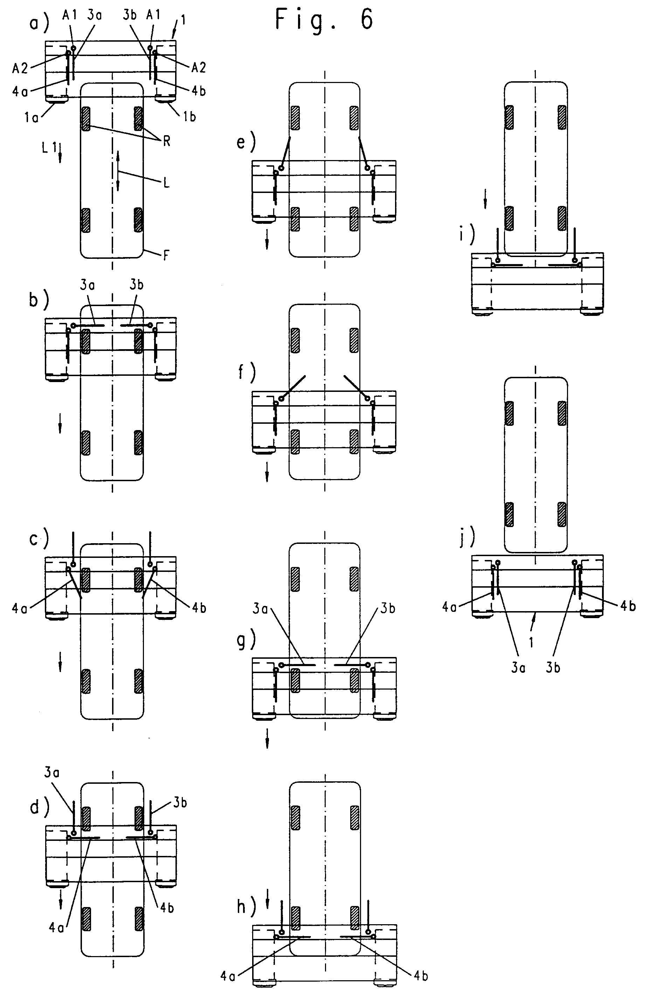

Diese Wirkungweise wird nachfolgend anhand des in der Figur 5 a) - e) dargestellten Laufschemas noch näher erläutert.

In Figur 5 a) ist das Portal in seiner Ausgangsstellung dargestellt, wobei das Fahrzeug F vor dem Portal angeordnet ist. Die Sprüharme 4a, 4b befinden sich in ihren Ausschwenkstellungen parallel zur Fahrzeuglängsrichtung L, während die Sprüharme 3a, 3b in ihren Einschwenkstellungen angeordnet sind. Zu Beginn des Waschvorganges wird durch die Sprüharme 3a, 3b der untere Bereich der Fahrzeugfront gewaschen, während die Sprüharme 4a, 4b den unteren Bereich der Fahrzeugseiten waschen. Bei der Fahrbewegung des Portals 1 in Richtung L1 waschen die Sprüharme 3a, 3b den Unterboden bis sie dicht an die Vorderräder R des Fährzeuges gelangen. Da die Sprühstrahlen der Sprüharme 3a in eingeschwenkter Stellung schräg nach oben und zum hinteren Bereich des Fahrzeuges F geneigt sind, wird auch ein Teil des zwischen den Vorderrädern R liegenden Unterbodenbereichs gewaschen. Sobald der Sensor der Steuereinrichtung 7 das Vorderrad R ertastet, werden über die Steuereinrichtung 7 die Stellmotoren 6a, 6b aktiviert. Sie schwenken gemäß Figur 5 b) die Spräharme 3a, 3b nach außen in ihre Ausschwenkstellung, während die Sprüharme 4a, 4b in ihre Einschwenkstellung gebracht werden.

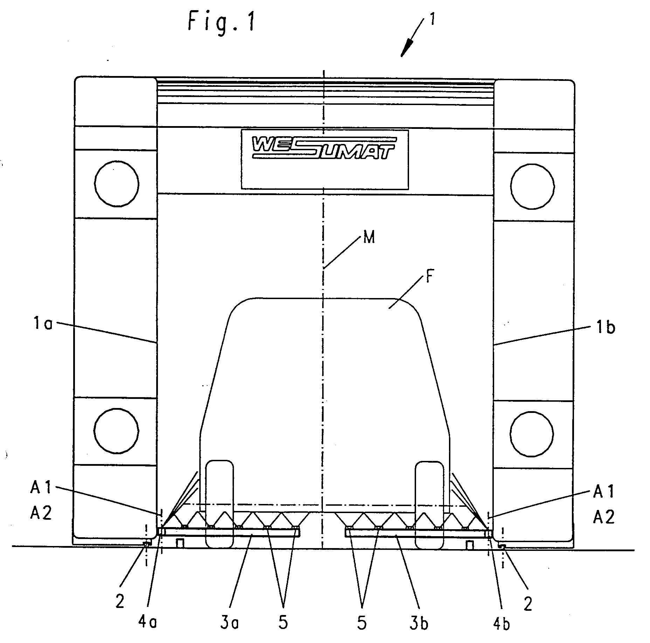

Die Sprühdüsen 5 sind an den Sprüharmen 3a, 3b bzw. 4a, 4b, wie es auch aus Figur 1 ersichtlich ist, zweckmäßig jeweils so angeordnet, daß ihre Sprühstrahlen in Ausschwenkstellung schräg nach oben zum Fahrzeug hin gerichtet sind. Hierdurch werden in Ausschwenkstellung der Sprüharme die unteren Seitenbereiche des Fahrzeuges gewaschen. Gleichzeitig hat dies aber auch den Effekt, daß in Einschwerkstellung der Sprüharme 3a, 3b deren Sprühstrahlen schräg nach hinten oben und in Einschwerkstellung der Sprüharme 4a, 4b deren Sprühstrahlen gegenüber dem Fahrzeug F schräg nach vorne oben gerichtet sind. Hierdurch wird in der in Figur 5 a) dargestellten Stellung der Sprüharme 3a, 3b zunächst der Frontbereich bis Höhe der Stoßstange und durch die Sprüharme 4a, 4b der zwischen den Vorderrädern R liegende Bereich des Unterbodens gewaschen, soweit er vorher nicht bereits von den Sprüharmen 3a, 3b gewaschen wurde, wie es vorstehend beschrieben ist. Da die Sprüharme 4a, 4b unmittelbar nach Passieren der Vorderräder in ihre Einschwenkstelluug gebracht werden, wird auch bei Weiterbewegung des Portals in Richtung L1 der unmittelbar an die Vorderräder angrenzende Bereich des Unterhodens gewaschen. Gleichzeitig waschen die ausgeschwenkten Sprüharme 3a, 3b die unteren Seitenhereiche des Fahrzeuges. Sobald die ausgeschwenkten Sprüharme 3a, 3b die Vorderräder passiert haben, was durch einen weiteren Sensor am Portal festgestellt werden kann, werden die Stellmotoren 6a, 6b erneut aktiviert. Sie schwenken die Sprüharme 3a, 3b wieder ein und die Spräharme 4a, 4b wieder aus, rechtzeitig, bevor diese in den Bereich der Hinterräder gelangen, wie es in Figur 5 c) dargestellt ist. Das Portal 1 wird mit den eingeschwenkten Sprüharmen 3a, 3b bis in die Position gemäß Figur 5 d) weiterbewegt, wo sich dann der berüglich der Vorderräder beschriebene Vorgang wiederholt und gemäß Figur 5 e) die Sprüharme 3a, 3b wieder ausgeschwenkt und die Sprüharme 4a, 4b wieder eingeschwenkt werden. In dieser Stellung der Sprüharme wird der Waschvorgang fortgesetzt bis der untere Heckbereich des Fahrzeuges und auch das Heck bis zur Stoßstangenhöhe durch die Sprüharme 4a, 4b gewaschen wurde. In Figur 2 ist eine Seitenansicht des Portals und des Fahrzeuges dargestellt, wobei sich das Portal etwa in der in Figur 4 und Figur 5 a) dargestellten Position befindet während Figur 3 der Portalstellung gemäß Figur 5 b) entspricht. Gegebenenfalls können die beiden an der gleichen Gestellseite vorgesehenen Sprüharme auch um eine gemeinsame vertikale Achse schwenkbar angeordnet sein.

Es ist auch möglich, die beiden an der gleichen Gestellseite vorgesehenen Sprüharme im rechten Winkel zueinander anzuordnen und starr miteinander zu verbinden. In diesem Fall könnten die starr miteinander verbundenen Sprüharme durch einen gemeinsamen Stellmotor vorschwenkt werden, wobei dieser Stellmotor so ausgelegt sein muß, daß er während der Vorbeibewegung eines Fahrzeugrades beide Schwenkarme langsam verschwenkt. Hierdurch wird der eine Schwenkarm, welcher sich zunächst in seiner Einschwenkstellung unter dem Fahrzeugboden befand, langsam ausgeschwenkt, während gleichzeitig der andere Schwenkarm eingeschwenkt wird.

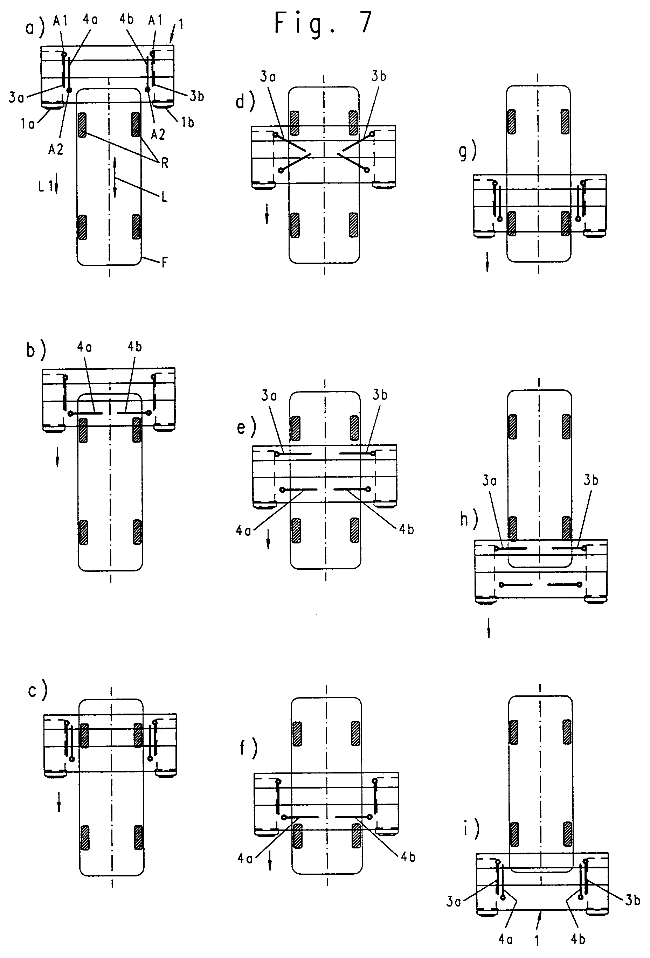

Bei den in Figur 6 und 7 dargestellten Ausführungsbeispielen sind Teile gleicher Funktion mit den gleichen Bezugszeichen versehen, wie bei dem vorhergehend beschriebenen Ausführungsbeispiel gemäß Figur 1 bis 5, so daß obige Beschreibung im wesentlichen sinngemäß zutrifft.

Bei dem in Figur 6 dargestellten Ausführungsbeispiel sind jedoch die Schwenkachsen A1 und A2 der beiden an der gleichen Gestellseite 1a bzw. 1b angeordneten Sprüharme 3a, 4a bzw. 3b, 4b benachbart zueinander über- oder nebeneinander angeordnet. Zum Verschwenken ist jedem Sprüharm ein eigener Stellmotor zugeordnet. In Ausgangsstellung des Portals 1 sind gemäß Figur 6a alle Sprüharme in Ausschwenkstellung parallel zur Fahrzeuglängsrichtung L angeordnet. Vor Beginn des Waschvorganges werden die Sprüharme 3a, 3b gemäß Figur 6 b) eingeschwenkt. Sie waschen den Unterboden vom Fahrzeugbeginn bis zum Vorderrad R. Bei Erreichen desselben werden die Sprüharme 3a, 3b gemäß Figur 6 c) ausgeschwenkt und die Sprüharme 4a, 4b schwenken ein. Figur 6 d) zeigt die Sprüharme 4a, 4b in voll eingeschwenktem Zustand. Durch die schräg nach hinten gerichteten Sprühstrahlen der Schwenkarme 3a, 3b und die schräg nach vorne gerichteten Sprühstrahlen der Schwenkarme 4a, 4b entsteht im Bereich zwischen den Vorderrädern R eine Überlappung der Sprühstrahlen, so daß dieser Bereich ebenfalls gut gewaschen wird. Nach dem Passieren der Vorderräder werden die Sprüharme 3a, 3b gemäß Figur 6 e) wieder eingeschwenkt und die Sprüharme 4a, 4b ausgeschwenkt. Die Spruharme 3a, 3b waschen dann den Unterboden bis zum Erreichen der Hinterräder, wo sich dann der bezüglich der Vorderräder beschriebene Vorgang gemäß Figur 6 h) und i) wiederholt. Die Sprüharme 3a, 3b werden ausgeschwenkt, die Sprüharme 4a, 4b eingeschwenkt. Sie waschen den Unterboden bis zum Fahrzeugende. In Endstellung werden dann alle Sprüharme gemäß Figur 6 j) in ihre Ausschwenkstellung gebracht. Bei kurzen Waschhallen können die Schwenkarme 3a, 3b auch in ihrer Ausschwenkstellung gemäß Figur 6 i) verbleiben und werden erst, wenn das Portal 1 wieder seine Ausgangstellung gemäß Figur 6a erreicht hat, wieder in die dort dargestellte Position zurückverschwenkt.

Bei dem in Figur 7 dargestellten Ausführungsbeispiel sind die Schwenkachsen A1 und A2 der beiden an der gleichen Gestellseite 1a bzw. 1b angeordneten Sprüharme 3a, 4a bzw. 3b, 4b in einem gegenseitigen Abstand voneinander angeordnet, der etwa der Lange eines der Sprüharme entspricht oder auch größer sein kann. Auch hier ist jedem Sprüharm ein eigener Stellmotor zugeordnet. In Ausgangsstellung des Portals 1 sind gemäß Figur 7 a) alle Sprüharme in Ausschwenkstellung parallel zur Fahrzeuglängsrichtung L angeordnet. Vor Beginn des Waschvorganges werden die Sprüharme 4a, 4b eingeschwenkt. Sie waschen den Unterboden von der Fahrzeugfront bis zu den Vorderrädern R, wie es in Figur 7 b) gezeigt ist. Bei Erreichen der Vorderräder werden die Schwenkarme 4a, 4b ausgeschwenkt. Nach dem Passieren der Vorderräder werden die Sprüharme 3a, 3b gemäß Figur 7 d) eingeschwenkt. Gleichzeitig werden auch die Sprüharme 4a, 4b eingeschwenkt. Sie waschen den Unterboden bis zum Erreichen der Hinterräder. Die Sprüharme 3a, 3b werden gemäß Figur 7 f) rechtzeitig vor dem Erreichen der Hinterräder wieder ausgeschwenkt. Nach dem Passieren der Hinterräder werden sie gemäß Figur 7 h) wieder eingeschwenkt und waschen den Unterboden von den Hinterrädern bis zum Fahrzeugende. Alle Sprüharme werden dann gemäß Figur 7 i) wieder in ihre Ausgangsstellungen zurückgeschwenkt.

Auch bezüglich der in den Figuren 6 und 7 dargestellten Ausführungsbeispielen wird durch die Schrägstellung der Sprühdüsen 5, die an den Sprüharmen 3a, 3b bzw. 4a, 4b jeweils so angeordnet sind, daß ihre Sprühstrahlen in Ausschwenkstellung schräg nach oben zum Fahrzeug hin gerichtet sind, erreicht, daß kein Wasser an die Hallendecke gespritzt wird, eine überlappende Wäsche beim Wechsel der Sprüharme im Radbereich gewährleistet ist und bei ausgeschwenkten Sprüharmen der Schwellerbereich des Fahrzeuges mit Hochdruck gereinigt wird.

## Patentansprüche

1. Unterboden-Waschvorrichtung für Kraftfahrzeuge, mit mindestens einem relativ zum Fahrzeug in dessen Längsrichtung beweglichen Gestell und mit einem Paar von mit mehreren Sprühdüsen besetzten Sprüharmen, von denen je einer im bodennahen Bereich an gegenüberliegenden Gestellseiten (Fahrzeugseiten) je um eine vertikale Schwenkachse schwenkbar angeordnet und aus einer quer zur Fahrzeuglängsrichtung verlaufenden Einschwenkstellung unter dem Fahrzeugboden zur Gestellseite hin ausschwenkbar ist, **dadurch gekennzeichnet,** daß ein zweites, gleichartiges Paar von Sprüharmen (3a, 3b) ebenfalls um vertikale Schwenkachsen (A1) schwenkbar an den gegenüberliegenden Gestellseiten (1a, 1b) angeordnet ist, daß den Sprüharmen (3a, 3b; 4a, 4b) Stellmotoren (6a, 6b) zugeordnet sind, mittels welchen die Sprüharme (3a, 3b; 4a, 4b) unter den Fahrzeugboden in ihre quer zur Fahrzeuglängsrichtung (L) verlaufende Einschwenkstellung einschwenkbar und in eine zweite, parallel zur Fahrzeuglängsrichtung (L) verlaufende Ausschwerkstellung ausschwerkbar sind, und daß eine die Fahrzeugräder (R) abtastende, auf die Stellmotoren (6a, 6b) einwirkende Steuereinrichtung (7) vorgesehen ist, mittels welcher die Sprüharme durch die Stellmotoren derart antreibbar sind, daß jeder der Sprüharme vor dem Erreichen eines Fahrzeugrades aus seiner Einschwenkstellung in seine Ausschwenkstellung ausschwenkbar , während des Passierens des Fahrzeugrades in seiner Ausschwenkstellung gehalten und nach dem Passieren des Fahrzeugrades wieder in seine Einschwenkstellung bringbar ist.

2. Unterboden-Waschvorrichtung für Kraftfahrzeuge, mit mindestens einem relativ zum Fahrzeug in dessen Längsrichtung beweglichen Gestell und mit einem Paar von mit mehreren Sprühdüsen besetzten Sprüharmen, von denen je einer im bodennahen Bereich an gegenüberliegenden Gestellseiten (Fahrzeugseiten) je um eine vertikale Schwenkachse schwenkbar angeordnet und aus einer quer zur Fahrzeuglängsrichtung verlaufenden Einschwenkstellung unter dem Fahrzeugboden zur Gestellseite hin ausschwenkbar ist, **dadurch gekennzeichnet,** daß ein zweites, gleichartiges Paar von Sprüharmen (3a, 3b) ebenfalls um vertikale Schwenkachsen (A1) schwenkbar an den gegenüberliegenden Gestellseiten (1a, 1b) angeordnet ist, daß den Sprüharmen (3a, 3b; 4a, 4b) Stellmotoren (6a, 6b) zugeordnet sind, mittels welchen die Sprüharme (3a, 3b; 4a, 4b) unter den Fahrzeugboden in ihre quer zur Fahrzeuglängsrichtung (L) verlaufende Einschwenkstellung einschwenkbar und in eine zweite, parallel zur Fahrzeuglängsrichtung (L) verlaufende Ausschwenkstellung ausschwenkbar sind, und daß eine die Fahrzeugräder (R) abtastende, auf die Stellmotoren (6a, 6b) einwirkende Steuereinrichtung (7) vorgesehen ist, mittels welcher die Sprüharme durch die Stellmotoren derart antreibbar sind, daß die beiden an der gleichen Gestellseite (1a oder 1b) angeordneten Sprüharme (3a, 4a oder 3b, 4b) jeweils im gleichen Drehsinn schwenkbar sind, jedoch dabei der eine Sprüharm eingeschwenkt wird und umgekehrt.

3. Vorrichtung nach Anspruch 1 oder 2, **dadurch gekennzeichnet,** daß die Sprühdüsen (5) an den Sprüharmen (3a, 3b; 4a, 4b) jeweils so angeordnet sind, daß ihre Sprühstrahlen in Ausschwenkstellung schräg nach oben zum Fahrzeug hin gerichtet sind.

4. Vorrichtung nach Anspruch 1 oder 2, **dadurch gekennzeichnet,** daß die Schwerkachsen (A1, A2) der an der gleichen Gestellseite (1a oder 1b) vorgesehenen beiden Sprüharme (3a, 4a oder 3b, 4b) in einem gegenseitigen Abstand (a) angeordnet sind, welche in etwa der Länge (s) der waagerechten Sehne eines Fahrzeugrades (R) in Höhe der Sprüharme entspricht.

5. Vorrichtung nach Anspruch 4, **dadurch gekennzeichnet,** daß den beiden an der gleichen Gestellseite vorgesehenen Sprüharme (3a, 4a oder 3b, 4b) ein gemeinsamer Stellmotor (6a oder 6b) zugeordnet ist.

6. Vorrichtung nach Anspruch 1 oder 2, **dadurch gekennzeichnet,** daß die beiden an der gleichen Gestellseite vorgesehenen Sprüharme um eine gemeinsame vertikale Achse schwenkbar sind.

7. Vorrichtung nach Anspruch 6, **dadurch gekennzeichnet,** daß die beiden an der gleichen Gestellseite vorgesehenen Sprüharme im rechten Winkel zueinander angeordnet und starr miteinander verbunden sind, wobei die Sprüharme durch einen gemeinsamen Stellmotor während der Vorbeibewegung eines Fahrzeugrades langsam verschwerkbar sind.

8. Vorrichtung nach Anspruch 1, **dadurch gekennzeichnet,** daß die Schwenkachsen der beiden an der gleichen Gestellseite vorgesehenen Sprüharme benachbart zueinander angeordnet sind.

9. Vorrichtung nach Anspruch 1, **dadurch gekennzeichnet,** daß die Schwerkachsen der an der gleichen Gestellseite vorgesehenen beiden Sprüharme in einem gegenseitigen Abstand angeordnet sind, der etwa der Länge eines Sprüharmes entspricht.

10. Vorrichtung nach einem der vorhergehenden Ansprüche, **dadurch gekennzeichnet,** daß in einer Ausgangs- oder Endstellung des Gestells alle Sprüharme in ihre Ausschwenkstellungen bringbar sind.
